# EUROPÄISCHE PATENTSCHRIFT

(11) **EP 0 873 254 B1**
(45) Veröffentlichungstag und Bekanntmachung des Hinweises auf die Patenterteilung: **22.03.2000**
(21) Anmeldenummer: 97900985.9
(22) Anmeldetag: 10.01.1997
(51) Int. Cl.: B60Q 1/42

(54) **ÜBERSCHALTSICHERUNG FÜR LENKSTOCKSCHALTER MIT AUTOMATISCHER RÜCKSTELLUNG**
ANTI-BREAKING MECHANISM FOR STEERING COLUMN MOUNTED SWITCH WITH AUTOMATIC RETURN TO NEUTRAL
SYSTEME EMPECHANT LA RUPTURE POUR INTERRUPTEUR SUR COLONNE DE DIRECTION A RETOUR AUTOMATIQUE AU POINT NEUTRE

(30) Priorität: 19.01.1996 DE 19601794
(43) Veröffentlichungstag der Anmeldung: 28.10.1998
(73) Patentinhaber: ITT Automotive Europe GmbH, 60488 Frankfurt (DE)
(72) Erfinder: HECHT, Walter, D-74321 Bietigheim-Bissingen (DE); ENGELHARDT, Martin, D-74189 Weinsberg (DE); KLEIN, Rudolf, D-74348 Lauffen (DE)
(74) Vertreter: Dreiss, Fuhlendorf, Steimle & Becker
(86) Internationale Anmeldenummer: EP9700077
(87) Internationale Veröffentlichungsnummer: WO9726151

(56) Entgegenhaltungen:
- DE-A- 4 418 328
- FR-A- 2 119 418

## Beschreibung

Die Erfindung betrifft einen Lenkstockschalter, bei dem der Schalthebel in eine neutrale Stellung selbsttätig zurückgestellt wird, wenn an dem Lenkstock bzw. dem Lenkrad eine Drehung in Gegenrichtung vorgenommen wird. Derartige Schalter werden beispielsweise eingesetzt für Blinkschalter, deren Schalthebel in eine erste Richtung verschwenkt wird, um die Richtungsänderung anzuzeigen, wobei der Schalthebel selbsttätig in seine Ursprungslage zurückkehrt, sobald der Lenkstock in der angezeigten Richtung seinen maximalen Drehwinkel erreicht hat und eine Umkehr der Lenkrichtung vornimmt. Im Prinzip wird dabei derart vorgegangen, daß aufgrund der Verschwenkung des Schalthebels (Blinkzeichengabe) ein Auslösenocken ausgefahren wird, der in der angezeigten Drehrichtung von einem mit dem Lenkstock gekoppelten Rückstellsegment überfahren werden kann, ohne daß eine Reaktion auftritt. Wird aber das Rückstellsegment aus der angezeigten Drehrichtung zurück in seine Ausgangslage gefahren, so nimmt es den Auslösenocken mit, der sich dabei um einen vorgegebenen Drehpunkt dreht und einen Betätigungsansatz des Mitnehmers im Lenkstockschalter ergreift. Der Mitnehmer wird dabei derart verschwenkt, daß er den Schalthebel in seine Ausgangslage zurückbefördert. Derartige Maßnahmen sind bekannt und bereits in der gattungsbildenden Anmeldung DE-A-44 18 328.3 der Anmelderin hinreichend beschrieben worden.

Eine Schwierigkeit tritt nun dann auf, wenn der Fahrer eines Kraftfahrzeugs zwar das Lenkrad aus der angezeigten Drehrichtung zurückdreht, gleichzeitig aber durch Festhalten des Schalthebels verhindert, daß dieser durch den Auslösenocken in seine neutrale Lage gebracht werden kann. Somit kann daher der Mitnehmer der durch den Auslösenocken ausgeübten Kraft auf einen seiner beiden Betätigungsansätze nicht ausweichen und der zur Rückstellung dienende mechanische Antrieb kann zu Bruch gehen.

Die Erfindung geht daher aus von einem Lenkstockschalter der sich aus dem Oberbegriff des Anspruchs 1 ergebenden Gattung. Aufgabe der Erfindung ist es, eine Konstruktion anzugeben, mit welcher ein Zerbrechen des Rückstellantriebes beim Festhalten des Schalthebels während des Rückdrehens des Lenkrads aus der angezeigten Richtung des Blinkers verhindert wird. Die Aufgabe wird durch die sich aus dem kennzeichenden Teil des Anspruchs 1 ergebende Merkmalskombination gelöst. Die Erfindung besteht im Prinzip darin, daß der Auslösenocken nicht mehr direkt im Schaltgehäuse gelagert ist, sondern in einer beweglich angeordneten Führung, die bei großen auf den Mitnehmer ausgeübten Kräften ausweichen kann, falls dieser festgehalten wird. Dabei muß die erfindungsgemäß beweglich angeordnete Führung vergleichsweise schwer beweglich sein, so daß im Normalfall der Schalthebel sicher in seine Ausgangslage zurückgefördert wird und die Führung nur dann bewegt werden kann, wenn die auf den Mitnehmer ausgeübten Seitenkräfte derart groß sind, daß der Rückholantrieb zu Bruch zu gehen droht.

Eine vergleichsweise einfache Konstruktion ergibt sich durch die Merkmalskombination nach Anspruch 2, gemäß der die Führung direkt im Schaltergehäuse beweglich gelagert ist, wobei die Führung mit Zentriermitteln in einer Ausgangslage gehalten wird, die sie erst verläßt, wenn die Rückholmechanik zu Bruch zu gehen droht.

Für die Zentrierung empfiehlt sich in Weiterbildung der Erfindung die Anwendung der in Anspruch 3 angegebenen Maßnahmen. Werden also die von dem Auslösenocken auf die Führung ausgeübten Kräfte größer als die Zentrierkräfte, so wird die Führung ausgelenkt und weicht in eine die auf sie wirkenden Kräfte schwächende Stellung aus, während voraussetzungsgemäß der Schalthebel durch den Fahrer festgehalten wird.

Um ein schlagartiges Ausweichen zu erreichen, dem dann ein schnelles Übergehen der Führung in die neue bruchsichere Lage folgt, empfiehlt sich in Weiterbildung der Erfindung die Merkmalskombination nach Anspruch 4. Praktisch geschieht das dadurch, daß beim Überwinden der Rastkräfte die Führung ruckartig den auf sie ausgeübten Kräften ausweicht.

Um zu verhindern, daß die Führung sich nicht nur in ihrer Bewegungsebene bewegt, sondern auch senkrecht hierzu, dienen die in Anspruch 5 aufgeführten Maßnahmen. Eine besonders montagefreundliche Anordnung hierzu erhält man durch die Merkmale nach Anspruch 6. Danach wird die Führung derart in das Schaltgehäuse eingerastet, daß sie sich nur noch in ihre Bewegungsebene verschieben kann, aber eine Bewegung senkrecht hierzu sicher verhindert wird.

Da die Hebekräfte an den dem Rückstellsegment des Lenkstocks zugewandten Ende des Auslösenockens am größten sind, empfiehlt sich in Weiterbildung der Erfindung die Merkmalskombination nach Anspruch 7. In diesen Bereich wirken auch hauptsächlich die von dem Drehpunkt des Auslösenockens auf die Führung ausgeübten Kräfte.

Für die Arbeitsweise der Erfindung ist wichtig, daß entsprechend den Merkmalen des Anspruchs 8 bei einem Festhalten des Steuerhebels der durch den Lenkstock zurückgedrehte Auslösenocken sich zum einen an einem der Betätigungsansätze des Mitnehmers abstützt und da dieser Ansatz durch den Steuerhebel festgehalten wird und somit nicht ausweichen kann, sich um diesen Ansatz dreht und damit die Führung aus ihrer neutralen Stellung drückt.

Ein Ausführungsbeispiel der Erfindung wird nachfolgend anhand der Zeichnung erläutert. Darin zeigt:
- Fig. 1: eine Draufsicht auf einen Ausschnitt eines von innen gesehenen Schalterdeckels ohne Auslösenocken
- Fig. 2: einen Ausschnitt auf den Boden des Schaltergehäuses mit eingesetztem Mitnehmer und auf dem Mitnehmer liegenden Auslösenocken ohne Führung
- Fig. 3: in vergrößerter und teilweise symbolischer Darstellung die Führung mit eingesetztem Auslösenocken in geschnittener Seitenansicht und
- Fig. 4: in vergrößerter ausschnittsweiser Darstellung eine Fig. 1 entsprechende Ansicht mit eingesetztem Auslösenocken.

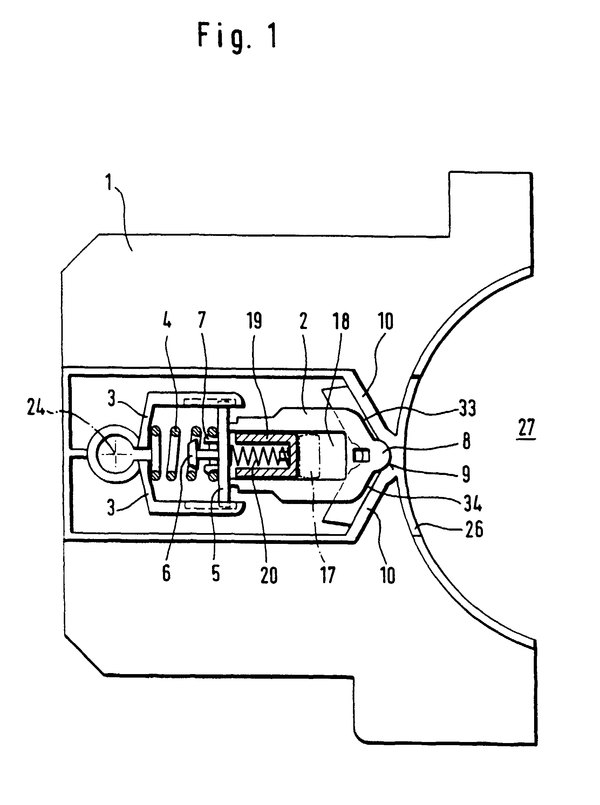

In Fig. 1 ist ein Deckel 1 des Gehäuses eines Lenkstockschalters ausschnittsweise zu erkennen, in dem eine Führung 2 beweglich gelagert ist. Eine aus zwei Abschnitten bestehende Stützwand 3 des Deckels 1 sorgt für ein Widerlager für eine zweite Druckfeder 4, die mit ihrem gegenüberliegenden Ende auf eine Druckwand 5 der Führung 2 einwirkt. Von der Druckwand 5 stehen ein Zentriernippel 6 und mindestens zwei Montagehaken 7 ab, die die Montage der zweiten Druckfeder 4 an der Druckwand 5 erleichtern und die Feder 4 zu Montagezwecken an der Druckwand halten. Dabei greifen die Montagehaken 7 von innen an Windungen der zweiten Druckfeder 4 an. Die Federkonstante der zweiten Druckfeder 4 ist vergleichsweise groß, so daß die Führung 2 mit erheblicher Kraft in Fig. 1 nach rechts gedrückt wird. Dort liegt sie mit einem Rastvorsprung 8 an einer Rastausnehmung 9 fest an, wobei die Rastausnehmung zwischen zwei Stützwände 10 angefügt ist, die dachförmig zueinander geneigt sind. Damit ist die Führung 2 in dem Deckel 2 in der Betrachtungsebene durch Kraftschluß fixiert.

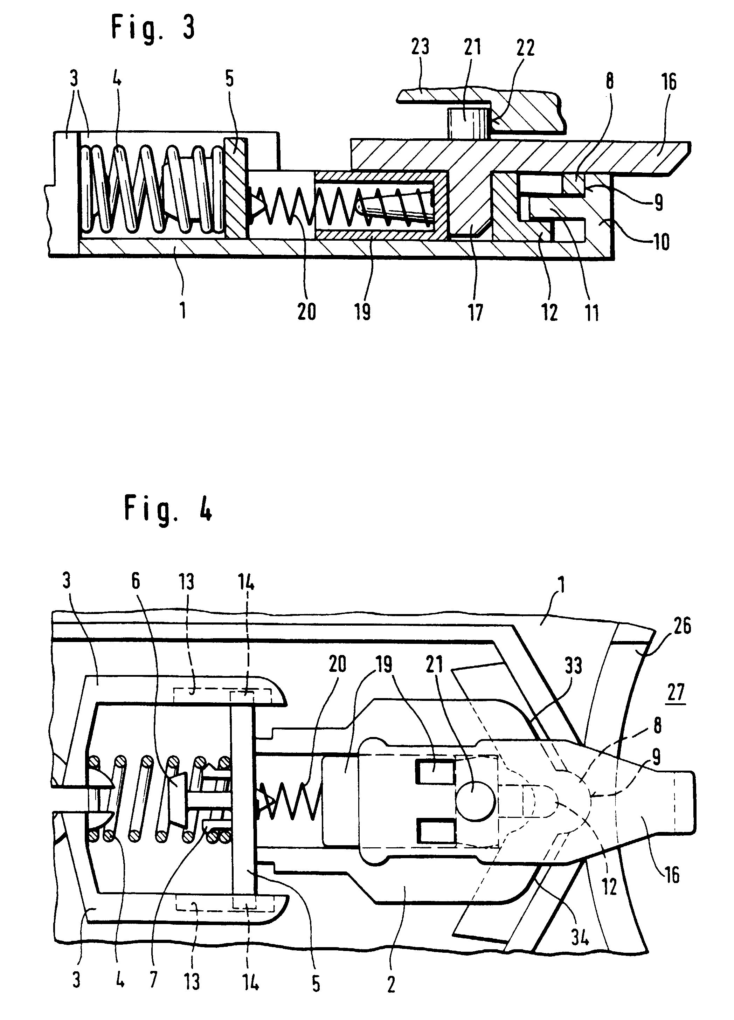

Eine Bewegung der Führung 2 senkrecht zur Betrachterebene wird wie aus Fig. 3 ersichtlich durch eine parallel zu den Stützwänden 10 verlaufende Leitwand 11 verhindert, welche durch eine Lasche 12 der Führung 2 hintergriffen wird (siehe Fig. 3). Die seitlichen Stirnflächen der Druckwand 5 haben Rastansätze, welche in entsprechenden Schlitzen der zueinander parallelen Bereiche der beiden L-förmigen Stützwände 3 in Längsrichtung der Führung 2 geführt sind. Damit ist die Führung 2 senkrecht zur Betrachterebene in Fig. 1 gesichert und kann sich also nur in der Betrachterebene von Fig. 1 bewegen. Dabei ist sowohl eine Bewegung in Längsrichtung der in Fig. 1 gezeigten Führung möglich, als auch eine begrenzte Drehbewegung in der Betrachterebene von Fig. 1. In Fig. 4 sind die Führungsschlitze 13 angedeutet, welche am Boden der Stützwände 3 laufen und durch Rastansätze an den Seitenwänden 14 der Führung 2 hintergriffen werden können. Dabei können die Rastansätze beispielsweise als Federarme mit Rasthaken gebildet sein, welche in die Schlitze 13 einrasten und in Richtung der Schlitze spreizend vorgespannt sind.

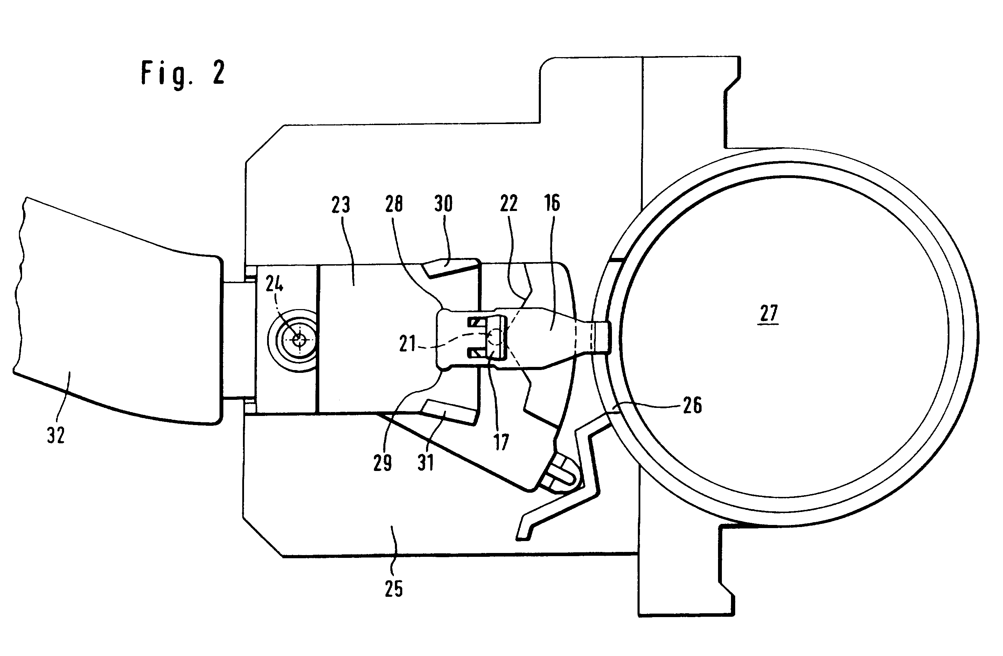

Innerhalb der Führung 2 wird der Auslösenocken im Prinzip in einer Weise geführt, wie sie bereits in der Patentanmeldung P 44 18 328.3 der Anmelderin beschrieben wurde. Der Auslösenocken 16 ragt mit einem im wesentlichen quaderförmigen Druckansatz in den Führungsraum 18, welcher von der Führung 2 rahmenförmig umschlossen wird. Dabei wirkt ein Druckstück 19, welches von einer ersten Druckfeder 20 beaufschlagt ist, auf den Druckansatz 17 ein, welcher in Fig. 1 gestrichelt angedeutet ist. Damit wird der Auslösenocken 16 in den Fig. 1 bis 4 nach rechts vorgespannt. Mit der Vorspannkraft der Druckfeder 20 liegt ein kreiszylinderförmiger Führungsansatz 21 an einer in den Fig. 2 und 3 angedeuteten Führungskurve 22 des Mitnehmers 23 an, der um einen Drehpunkt 24 drehbar zwischen Deckel 1 und Boden 23 des Schaltergehäuses (siehe Fig. 2) gelagert ist.

Der Auslösenocken liegt in Fig. 1 in nicht dargestellter Form oberhalb der Führung 2 in dem Deckel 1 und ragt über eine Wandausnehmung 26 durch den Deckel 1 in den für den Lenkstock freigehaltenen Raum 27.

Fig. 2 ist vom Deckel her auf den Boden 25 des Gehäuses gesehen, wobei man noch den zum Betrachter hin weisenden Druckansatz 17 erkennt, wobei allerdings die den Druckansatz 17 umgebende Führung 2 weggelassen wurde. Unterhalb des Druckansatzes 17 sitzt in Fig. 2 nicht erkennbar, wie aus Fig. 3 und 4 ersichtlich, der Führungsstift 21, welcher längs der Führungskurve 22 in Fig. 2 geführt wird. Somit läßt sich aus Fig. 2 entnehmen, daß beim Verschwenken des Mitnehmers 23 um den Drehpunkt 24 der in Fig. 2 nicht sichtbare Führungsstift entlang der Führungskurve 22 in der Betrachterebene nach Fig. 2 nach vorn ausweichen kann und so in den Raum 27 ragt. In dieser Lage liegt die Druckkante 28 bzw. 29 an dem vorspringenden Druckansatz 30 bzw. 31 an, während sie bei arretierter Führung 2 um den Druckansatz 17 im Führungsraum 18 drehbar ist.

Wird nun das Lenkrad aus der durch die Blinkeranzeige angezeigten Drehrichtung zurückgedreht, so ergreift das Rückstellsegment des Lenkstocks das in den Raum 27 ragende Ende des Auslösenockens 16 und dreht diesen um den Druckansatz 17. Als Folge davon verschwenken die Druckkanten 28 bzw. 29 über die Betätigungsansätze 30 bzw. 31 den Mitnehmer 23 in seine Ausgangslage.

Wird aber nun der Mitnehmer über den Schalthebel 32 von der Bedienungsperson in seiner Drehlage festgehalten, so kann er nicht gegen die von dem Auslösenocken 16 ausgeübte Kraft ausweichen. Infolgedessen würde das System an seiner schwächsten Stelle zerbrechen. Hier schafft die Erfindung dadurch Abhilfe, daß der Auslösenocken 17 die Führung 20 zwingt, entgegen der Kraft der zweiten Druckfeder 4 auszuweichen, indem die Führung aus ihrer Raststellung ausschwenkt und sich in ihrer Längsrichtung entgegen der zweiten Druckfeder verschiebt.

Nachdem somit das nicht dargestellte Rückstellsegment des Lenkstocks den Auslösenocken 16 bei festgehaltenem Schalthebel 32 passiert hat, ist das System weiterhin voll betriebsfähig. Es kann auch die Blinkschaltung erneut eingeschaltet werden, sobald der Fahrer den Schalthebel losgelassen hat.

## Patentansprüche

1. Lenkstockschalter mit automatischer Rückstellung des Schalthebels (32) durch Rückholen eines ausgelenkten Auslösenockens (16) mittels eines mit dem Lenkstock gekoppelten Rückstellsegments, wobei der Auslösenocken (16) in einer Führung (2) gegen die Vorspannung einer ersten Druckfeder (20) längsverschiebbar und schwenkbar gelagert ist, dadurch **gekennzeichnet**, daß die Führung (2) gegen die Vorspannung einer zweiten Druckfeder (4), deren Federkraft erheblich größer als die der ersten Druckfeder (20) ist, längsverschiebbar und schwenkbar gegenüber dem Schaltgehäuse (1,25) angeordnet ist.

2. Lenkstockschalter nach Anspruch 1, dadurch **gekennzeichnet**, daß die Führung (2) im Gehäuse (1,25) des Schalters gelagert ist, wobei das dem Auslösenocken (16) zugewandte Ende der Führung (2) mit Zentriermitteln (8,33,34) versehen ist, die mit zugehörigen Zentriermitteln (9,10) derart zusammenwirken, daß die Führung (2) unter der Kraft der zweiten Druckfeder (4) in einer neutralen Mittellage gehalten ist (Fig. 1, Fig. 4).

3. Lenkstockschalter nach Anspruch 2, dadurch **gekennzeichnet**, daß die Zentriermittel (2) in Form einer Dachschräge zueinander geneigte Stirnflächen (33,34) an der Führung (2) und die zugeordneten Führungsmittel entsprechend zueinander geneigte Stützwände (10) im Schaltergehäuse (1) sind.

4. Lenkstockschalter nach Anspruch 2 oder 3, dadurch **gekennzeichnet**, daß an der Stoßkante der beiden Stirnflächen (33,34) der Führung (2) ein Rastvorsprung (8) vorsteht, dem eine entsprechende Ausnehmung (9) an der Stoßkante der beiden Stützwände (10) des Schaltergehäuses (1) zugeordnet ist.

5. Lenkstockschalter nach einem der Ansprüche 1 bis 4, dadurch **gekennzeichnet**, daß die Führung (2) mit mindestens einer Führungslasche (12) versehen ist, welche eine zugeordnete Leitwand (11) des Schaltergehäuses (1) hintergreift, wobei die Führungslasche (12) und die Leitwand (11) derart ausgeformt sind, daß sie eine Bewegung der Führung parallel zur Bewegungsebene des Auslösenockens (16) gestatten und senkrecht zu dieser Ebene behindern.

6. Lenkstockschalter nach Anspruch 5, dadurch **gekennzeichnet**, daß zumindest eine der Führungslaschen (14) hinter die zugeordnete Führungsfläche (13) einrastbar ist.

7. Lenkstockschalter nach Anspruch 3 und 5, dadurch **gekennzeichnet**, daß im wesentlichen parallel zu den dachförmigen Stützwänden (10) eine sich in der Bewegungsebene der Führung erstreckende Leitwand (11) erstreckt, die eine unterhalb des Rastvorsprungs (8) angeordnete Lasche (12) der Führung (2) hintergreift.

8. Lenkstockschalter nach einem der vorangegangenen Ansprüche, dadurch **gekennzeichnet**, daß das dem Auslösenocken (16) zugewandte Ende des Schalthebels (32) oder dessen Mitnehmer (23) mit Betätigungsansätzen (30,31) versehen ist, an denen beim Zurückholen der Auslösenocken (16) angreift, um den Schalthebel (32) in seine neutrale Stellung zu fördern und daß bei arretiertem Schalthebel (32) der mitgenommene Auslösenocken (16) sich an einem der Betätigungsansätze (30,31) abstützt und die Führung (2) aus ihrer neutralen Stellung fördert.

## Claims

1. A steering column assembly switch with automatic reset of the switch lever (32) by returning a deflected triggering cam (16) by means of a reset segment, wherein the triggering cam (16) is seated in a guide (2) in a longitudinally displaceable manner and pivotable against the prestress of a first compression spring (20), characterized in that the guide (2) is arranged longitudinally displaceable and pivotable in respect to the switch housing (1, 25) against the prestress of a second compression spring (4), whose spring force is considerably greater than that of the first compression spring (20).

2. The steering column assembly switch in accordance with claim 1, characterized in that the guide (2) is seated in the housing (1, 25), wherein the end of the guide (2) facing the triggering cam (16) is provided with centering means (8, 33, 34), which cooperate with associated centering means (9, 10) in such a way that the guide (2) is maintained in a neutral center position by the force of the second compression spring (4) (Fig. 1, Fig. 4).

3. The steering column assembly switch in accordance with claim 2, characterized in that the centering means are front faces (33, 34) in the form of an inclined roof at the guide (2), and the associated guide means are support walls (10), which are correspondingly inclined toward each other, in the switch housing (1).

4. The steering column assembly switch in accordance with claim 2 or 3, characterized in that an arresting projection (8), with which a corresponding recess (9) at the joint edges of the two support walls (10) of the switch housing (1) is associated, projects away from the joint edge of the two front faces (33, 34) of the guide (2).

5. The steering column assembly switch in accordance with one of claims 1 to 4, characterized in that the guide (2) is provided with at least one guide tongue (12), which extends behind an associated guide wall (11) of the switch housing (1), wherein the guide tongue (12) and the guide wall (11) are shaped in such a way that they permit a movement of the guide parallel with the movement plane of the triggering cam (16) and prevent a movement perpendicularly in respect to this plane.

6. The steering column assembly switch in accordance with claim 5, characterized in that at least one of the guide tongues (12) can be arrested behind the associated guide surface (13).

7. The steering column assembly switch in accordance with claim 3 and 5, characterized in that a guide wall (11), which extends in the movement plane of the guide, extends essentially parallel in respect to the roof-shaped support walls (10) and extends behind a tongue (12) of the guide (2) arranged below the arresting projection (8).

8. The steering column assembly switch in accordance with one of the preceding claims, characterized in that the end of the switch lever (32) facing the triggering cam (16), or its catch (23), is provided with actuating shoulders (30, 31), on which the triggering cam (16) acts during the return in order to convey the switch lever (32) into its neutral position, and that, whith the switch lever (32) arrested, the triggering cam (16) which was taken along is supported on one of the actuating shoulders (30, 31) and conveys the guide (2) out of its neutral position.

## Revendications

1. Interrupteur de colonne de direction avec rappel automatique du levier de commutation (32) par retour d'une came de déclenchement (16) déviée au moyen d'un segment de rappel couplé à la colonne de direction, dans lequel la came de déclenchement (16) est montée de manière à être déplaçable longitudinalement et à pouvoir pivoter dans un guide (2) à l'encontre de la précontrainte d'un premier ressort de pression (20), caractérisé en ce que le guide (2) est disposé de manière à être déplaçable longitudinalement et à pouvoir pivoter par rapport au boîtier de commutation (1,25) à l'encontre de la précontrainte d'un second ressort de pression (4), dont la force élastique est nettement supérieure à celle du premier ressort de pression (20).

2. Interrupteur de colonne de direction selon la revendication 1, caractérisé en ce que le guide (2) est monté dans le boîtier (1,25) de l'interrupteur, l'extrémité du guide (2) tournée vers la came de déclenchement (16) étant pourvue de moyens de centrage (8,33,34) qui coopèrent avec des moyens de centrage associés (9,10) de telle sorte que le guide (2) est retenu sous la force du second ressort de pression (4), dans une position médiane neutre (figure 1, figure 4).

3. Interrupteur de colonne de direction selon la revendication 2, caractérisé en ce que les moyens de centrage (2) sont des surfaces frontales (33,34), qui sont inclinées l'une par rapport à l'autre à la manière des pans obliques d'un toit et sont présentes sur le guide (2), et les moyens de guidage associés, sont des parois d'appui (10) inclinées l'une par rapport à l'autre conformément au pans obliques et situées dans le boîtier de l'interrupteur (1).

4. Interrupteur de colonne de direction selon la revendication 2 ou 3, caractérisé en ce que sur l'arête d'aboutement des deux surfaces frontales (33,34) du guide (2) fait saillie un appendice saillant d'encliquetage (8), auquel est associé un évidement correspondant (9) formé au niveau de l'arête d'aboutement des deux parois d'appui (10) du boîtier (1) de l'interrupteur.

5. Interrupteur de colonne de direction selon l'une des revendications 1 à 4, caractérisé en ce que le guide (2) est pourvu d'au moins une patte de guidage (12), qui s'engage derrière une paroi de guidage associée (11) du boîtier (1) de l'interrupteur, la patte de guidage (12) et la paroi de guidage (11) étant conformées de telle sorte qu'elles permettent un déplacement du guide parallèlement au plan de déplacement de la came d'actionnement (16) et empêchent un déplacement du guide perpendiculairement à ce plan.

6. Interrupteur de colonne de direction selon la revendication 5, caractérisé en ce qu'au moins l'une des pattes de guidage (14) peut être encliquetée derrière la surface de guidage associée (13).

7. Interrupteur de colonne de direction selon les revendications 3 et 5, caractérisé en ce qu'une paroi de guidage (11), qui s'étend dans le plan de déplacement du guide et s'engage derrière une patte (12) du guide (2), qui est disposée au-dessous de la partie saillante d'encliquetage (8), s'étend essentiellement parallèlement aux parois d'appui en forme de toit (10).

8. Interrupteur de colonne de direction selon l'une des revendications précédentes, caractérisé en ce que l'extrémité du levier de commutation (32), tournée vers la came d'actionnement (16), ou son organe d'entraînement (23) est équipé d'appendices saillants d'actionnement (30,31), qui sont saisis par la came d'actionnement (16) lors du mouvement de retour de manière à amener le levier de commutation (32) dans sa position neutre et que, lorsque le levier de commutation (32) est arrêté, la came d'actionnement (16) entraînée conjointement prend appui sur l'un des appendices saillants d'actionnement (30,31) et entraîne le guide (2) hors de sa position neutre.
